# EUROPÄISCHE PATENTANMELDUNG

(11) **EP 1 166 989 A2**
(43) Veröffentlichungstag der Anmeldung: **02.01.2002**
(21) Anmeldenummer: 01114712.1
(22) Anmeldetag: 21.06.2001
(51) Int. Cl.: B29C 39/42, B29C 39/44

(54) **Verfahren und Vorrichtung zum Vakuumgiessen**

(30) Priorität: 23.06.2000 DE 10030874
(71) Anmelder: MK Technology GmbH, 53501 Grafschaft (DE)
(72) Erfinder: Kügelgen, Michael, Dipl.-Ing., 53111 Bonn (DE)
(74) Vertreter: Goetz, Rupert, Dipl.-Ing.

(57) **Zusammenfassung**

Es werden ein Verfahren sowie eine Vorrichtung zum Vakuumgießen beschrieben. Bei dem Verfahren wird der Übertritt eines zu verarbeitenden Mediums von einer ersten evakuierten Kammer (12) in eine zweite evakuierte Kammer (14) mittels einer Druckdifferenz zwischen den beiden Kammern (12, 14) unterstützt. Nach dem Überleiten des zu verarbeitenden Mediums von der ersten Kammer (12) in die zweite Kammer (14) und vor dem Fluten der beiden Kammern (12, 14) wird die Druckdifferenz zwischen den Kammern (12, 14) unter Aufrechterhaltung eines Unterdrucks in den beiden Kammern (12, 14) egalisiert. Die Vorrichtung weist eine erste Ventilanordnung (40) zum Verbinden der beiden Kammern (12, 14) untereinander und zum Fluten der beiden Kammern (12, 14) sowie eine mit der ersten Kammer (12) verbundene zweite Ventilanordnung (60) und eine mit der zweiten Kammer (14) verbundene dritte Ventilanordnung (70) zum Erzeugen und Egalisieren der Druckdifferenz auf.

## Beschreibung

Die Erfindung betrifft ein Verfahren zum Vakuumgießen, bei dem der Übertritt eines zu verarbeitenden Mediums von einer ersten evakuierten Kammer in eine zweite evakuierte Kammer von einer Druckdifferenz zwischen den beiden Kammern unterstützt wird. Die Erfindung betrifft weiterhin eine Vorrichtung zum Vakuumgießen.

Beim Vakuumgießen wird das zu verarbeitende Medium, beispielsweise ein Zwei-Komponenten-Harz, zunächst unter Vakuum vorentgast. Durch das Vorentgasen werden Blasen in dem zu verarbeitenden Medium vermieden, so daß ein lunkerfreies Gußteil hergestellt werden kann. Im Anschluß an das Vorentgasen unter Vakuum werden die beiden Komponenten des Harzes gemischt und in eine Gießform eingefüllt. Die Gießform wird ausschließlich über die Schwerkraft gefüllt.

Zur Herstellung filigranerer Gußteile und zur Verarbeitung hochviskoser Harze wurden sogenannte Differenzdruckverfahren vorgeschlagen. Dabei wird die Gießform nicht mehr ausschließ-lich über die Schwerkraft gefüllt, sondern das Füllen wird durch eine Druckdifferenz zwischen der Umgebung des zu verarbeitenden Mediums und dem Inneren der Gießform unterstützt.

Ein derartiges Differenzdruckverfahren und eine Vorrichtung zum Durchführen dieses Differenzdruckverfahrens sind beispielsweise aus der JP 03150115 A bekannt. Die Vorrichtung umfaßt zwei gleich große, evakuierbare und übereinander angeordnete Kammern. In der oberen der beiden Kammern wird das Zwei-Komponenten-Harz vorentgast und gemischt. In der unteren der beiden Kammern ist die Gießform angeordnet. Die obere Kammer ist mit der unteren Kammer über einen Durchgang für das entgaste und vermische Harz verbunden. Über diesen Durchgang kann das Harz in die Gießform eingefüllt werden.

Bei dem aus der JP 03150115 A bekannten Vakuumgießverfahren werden in einem ersten Schritt die beiden Kammern evakuiert. Nach dem Entgasen und Mischen der beiden in der oberen Kammer angeordneten Komponenten des Harzes wird in einem zweiten Schritt eine Druckdifferenz zwischen der oberen Kammer und der unteren Kammer ausgebildet. Hierzu wird die Verbindung der oberen Kammer mit einer Vakuumquelle unterbrochen und die obere Kammer durch Öffnen eines Ventiles kurzzeitig mit Atmosphärendruck verbunden. Anschließend wird der Durchgang von der oberen zur unteren Kammer geöffnet, so daß das vermischte Harz sowohl aufgrund der Schwerkraft als auch aufgrund der Druckdifferenz zwischen der oberen und der unteren Kammer von der oberen Kammer in die in der unteren Kammer angeordneten Gießform übertritt.

Der Erfindung liegt die Aufgabe zugrunde, ein Verfahren zum Differenzdruck-Vakuumgießen anzugeben, welches sicher und zuverlässig durchführbar ist. Der Erfindung liegt weiterhin die Aufgabe zugrunde, eine geeignete Vorrichtung zur Durchführung des Verfahrens anzugeben.

Zur Lösung dieser Aufgabe in verfahrenstechnischer Hinsicht wird bei einem Vakuumgießverfahren der eingangs erwähnten Art vor dem Fluten der beiden Kammern die Druckdifferenz unter Aufrechterhaltung eines Unterdrucks in den beiden Kammern egalisiert.

Durch eine solche Maßnahme ist gewährleistet, daß undefinierte Betriebszustände, welche auf die nach dem Befüllen der Gießform nicht mehr erforderliche Druckdifferenz zurückzuführen sind, ausgeschlossen werden. Auf diese Weise läßt sich die Reproduzierbarkeit des erfindungsgemäßen Vakuumgießverfahrens erhöhen und die Qualität der Gußteile verbessern.

Da das Egalisieren der Druckdifferenz unter Aufrechterhaltung eines gewissen Unterdrucks in den beiden Kammern erfolgt, ist es nach dem Egalisieren der Druckdifferenz erforderlich, daß beide Kammern zum Erzielen von Umgebungsdruck und insbesondere Atmosphärendruck in den Kammern geflutet werden. Dieses Fluten erfolgt vorzugsweise derart, daß während des Flutens der Druck in den beiden Kammern gleich groß gehalten wird. Es wird folglich während des Flutens darauf geachtet, daß sich zwischen den beiden Kammern keine Druckdifferenz ausbildet, d.h. daß das Fluten gleichmäßig geschieht.

Ein solches Vorgehen ist insbesondere dann sinnvoll, wenn die beiden Kammern unterschiedliche Kammervolumina aufweisen. Im Falle unterschiedlicher Kammervolumina steigt der Druck in der Kammer mit geringerem Kammervolumen nämlich in der Regel schneller an als in der Kammer mit dem größerem Kammervolumen. Die damit einhergehende Ausbildung einer Druckdifferenz kann zu einem unerwünschten Aufschäumen des zu verarbeitenden Materials innerhalb der Gießform und zu weiteren Effekten führen, welche die Qualität des Gußteiles negativ beeinflussen. Ein gleichmäßiges Fluten der beiden Kammern hingegen gewährleistet eine hohe Qualität des Gußteiles.

Obwohl das gleichmäßige Fluten der Kammern grundsätzlich unabhängig von dem eingangs erwähnten Egalisieren der Druckdifferenz zu qualitativen Verbesserungen des Gießergebnisses führt, ergänzen sich das Egalisieren der Druckdifferenz vor dem Fluten der Kammern und das gleichmäßige Fluten der Kammern unter Vermeidung der Ausbildung einer erneuten Druckdifferenz in synergistischer Weise.

Das erfindungsgemäße Egalisieren der Druckdifferenz vor dem Fluten der beiden Kammern erfolgt vorzugsweise schlagartig. Dies bedeutet, daß unmittelbar nach dem Füllen der Gießform die Druckdifferenz zwischen den beiden Kammern innerhalb einer kurzen Zeitspanne von z.B. nicht mehr als 1 S wieder abgebaut wird. Zur Vermeidung von Überschwingungen wird die Druckdifferenz vorteilhafterweise in elektronisch geregelter Weise egalisiert.

Das Ausbilden der Druckdifferenz zwischen der ersten und der zweiten Kammer, welches vorzugsweise ebenfalls elektronisch geregelt abläuft, läßt sich auf unterschiedliche Weise realisieren. So ist es möglich, zur Ausbildung der Druckdifferenz den Druck in der zweiten Kammer, in welcher sich die Gießform befindet, zu erniedrigen. Zum Egalisieren der Druckdifferenz wird dann der Druck in der ersten Kammer, in welcher das zu verarbeitende Material entgast wird, ebenfalls erniedrigt.

Gemäß einer bevorzugten Ausführungsform der Erfindung wird die der Druckdifferenz jedoch dadurch ausgebildet, daß nach einem gleichmäßigen Evakuieren der beiden Kammern der Druck in der ersten Kammer erhöht wird. Zu diesem Zweck kann beispielsweise die erste Kammer kurzzeitig belüftet werden. Im Gegensatz zum Fluten, welches der Herstellung von Umgebungsdruck in den Kammern dient, wird beim Belüften der Druck in der ersten Kammer nur geringfügig, vorzugsweise um maximal 500 hPas und besonders vorzugsweise um zwischen 30 und 100 hPas, erhöht. Zum Egalisieren der Druckdifferenz wird im Anschluß an das Befüllen der Gießform auch die zweite Kammer kurzzeitig belüftet. Sowohl das Belüften der ersten Kammer als auch das Belüften der zweiten Kammer erfolgt vorzugsweise in elektronisch geregelter Weise.

Aus Sicherheitserwägungen besteht die Möglichkeit, die Druckdifferenz zwischen den beiden Kammern zu überwachen und bei Überschreiten einer voreingestellten Druckdifferenz, verursacht beispielsweise durch eine Undichtigkeit oder eine offenstehende Tür, beide Kammern automatisch zu fluten. Ein Fluten der Kammern ist insbesondere dann zweckmäßig, wenn der Druck in der zweiten Kammer den Druck in der ersten Kammer um einen bestimmten Betrag, beispielsweise 100 hPas, übersteigt. Zu Kontrollzwecken ist es möglich, den Sollwert des Differenzdrucks und den Istwert des Differenzdrucks auf einer Anzeige dem Benutzer zur Kenntnis zu bringen.

Zum Durchführen des oben beschriebenen Verfahrens eignet sich insbesondere eine Vakuumgießvorrichtung mit einer ersten evakuierbaren Kammer, einer mit der ersten evakuierbaren Kammer über einen Durchgang für das zu verarbeitende Material verbindbaren zweiten evakuierbaren Kammer sowie mindestens drei Ventilanordnungen. Eine erste der drei Ventilanordnungen verbindet die beiden Kammern miteinander und ist zum Fluten der beiden Kammern ausgebildet. Eine zweite der drei Ventilanordnungen ist mit der ersten Kammer und eine dritte der drei Ventilanordnungen mit der zweiten Kammer verbunden. Die zweite und die dritte Ventilanordnung dienen dem Erzeugen und Egalisieren der das Vakuumgießen unterstützenden Druckdifferenz zwischen den beiden Kammern.

Erfindungsgemäß sind folglich getrennte Ventilanordnungen für das Fluten der beiden Kammern, d.h. um die beiden Kammern auf Umgebungsdruck zu bringen, und für das Erzeugen und das Egalisieren der Druckdifferenz vorgesehen. Eine derartige Ausgestaltung der Vakuumgießvorrichtung ermöglicht eine besonders exakte Prozeßkontrolle, da der Aufbau jeder Ventilanordnung auf ihren speziellen Einsatzzweck abgestimmt werden kann.

Weiterhin erhöht das Vorsehen einer Mehrzahl separater Ventilanordnungen die Anzahl der für die Prozeßregelung zur Verfügung stehenden Freiheitsgrade. Dies ist insbesondere dann zweckmäßig, wenn die beiden Kammern unterschiedliche Kammervolumina aufweisen, da sich, wie erwähnt, beim Fluten unterschiedlich großer Kammern eine unerwünschte Druckdifferenz zwischen den beiden Kammern einstellen kann. Durch eine Mehrzahl von zur Verfügung stehenden Ventilanordnungen hingegen kann der Ausbildung einer Druckdifferenz während des Flutens der Kammern sicher entgegengewirkt werden.

Gemäß einer bevorzugten Ausführungsform umfaßt die erste Ventilanordnung einen Knoten, über welchen die erste Kammer mit der zweiten Kammer sowie beide Kammern mit Umgebungsdruck verbunden werden können. Dieser Knoten ist beispielsweise als T-Stück ausgebildet, wobei je eine der drei Abzweigungen des T-Stücks mit der ersten Kammer, der zweiten Kammer und Umgebungsdruck verbindbar ist.

Vorzugsweise umfaßt die erste Ventilanordnung weiterhin eine Drosseleinrichtung zur Reduzierung eines Leitungsquerschnitts zwischen dem Knoten und wenigstens einer der Kammern. Insbesondere bei Kammern mit unterschiedlichen Kammervolumina ist es zweckmäßig, zwischen dem Knoten und der Kammer mit dem geringeren Kammervolumen eine derartige Drosseleinrichtung vorzusehen, um ein gleichmäßiges Fluten der beiden Kammern zu ermöglichen. Die Drosseleinrichtung kann in Gestalt einer fest vorgegebenen Querschnittsverjüngung einer Leitung oder auch in Gestalt eines Ventils mit einstellbarem Öffnungsquerschnitt vorgesehen werden.

Die erste Ventilanordnung kann mindestens ein Ventilelement umfassen, welches ein Fluten der beiden Kammern ermöglicht. So ist es denkbar, das Ventilelement zwischen dem Knoten und Umgebungsdruck anzuordnen. Auch kann ein erstes Ventilelement zwischen dem Knoten und der ersten Kammer und ein zweites Ventilelement zwischen dem Knoten und der zweiten Kammer vorgesehen werden.

Vorzugsweise umfaßt auch die zweite Ventilanordnung und/oder die dritte Ventilanordnung jeweils mindestens ein Ventilelement, um die erste Kammer und/oder die zweite Kammer mit Umgebungsdruck zu verbinden. So läßt sich beispielsweise durch kurzzeitiges Öffnen eines Ventilelementes der zweiten Ventilanordnung die erste Kammer zur Ausbildung einer Druckdifferenz belüften. Zum Egalisieren dieser Druckdifferenz kann das Ventilelement der dritten, mit der zweiten Kammer verbundene Ventilanordnung kurzzeitig geöffnet werden.

Die Ventilelemente aller Ventilanordnungen können beispielsweise als pneumatische Ventile oder als elektromagnetische Ventile ausgestaltet sein. Vorzugsweise sind die Ventilelemente derart ausgebildet, daß die Ventilelemente der zweiten und/oder dritten Ventilanordnung, welche für das Ausbilden und Egalisieren der Druckdifferenz vorhanden sind, einen geringeren maximalen Öffnungsquerschnitt aufweisen als das mindestens eine zum Fluten eingesetzte Ventilelement der ersten Ventilanordnung.

Die Vakuumgießvorrichtung kann weiterhin eine Vakuumquelle zum Evakuieren der beiden Kammern aufweisen. Die Vakuumquelle ist beispielsweise über eine vierte Ventilanordnung mit einer der beiden oder mit beiden Kammern verbunden. Sofern die Vakuumquelle mit einer der beiden Kammern verbunden ist, ist vorteilhafterweise eine fünfte Ventilanordnung vorhanden, welche das Verbinden der beiden Kammern untereinander ermöglicht.

Sowohl die erste Ventilanordnung als auch die fünfte Ventilanordnung verbinden folglich die beiden Kammern miteinander. Während die erste Ventilanordnung jedoch in erster Linie für das Fluten der beiden Kammern ausgebildet ist, ermöglicht die fünfte Ventilanordnung in geöffnetem Zustand ein gleichzeitiges Evakuieren der beiden Kammern für den Fall, daß die Vakuumquelle nur mit einer der beiden Kammern verbunden ist.

Vorteilhafterweise ist für jede der beiden Kammern mindestens ein Drucksensor vorgesehen. Dieser Drucksensor kann mit einer Steuereinheit für die verschiedenen Ventilanordnungen gekoppelt werden, so daß eine geregelte Betätigung der einzelnen Ventilanordnungen möglich ist.

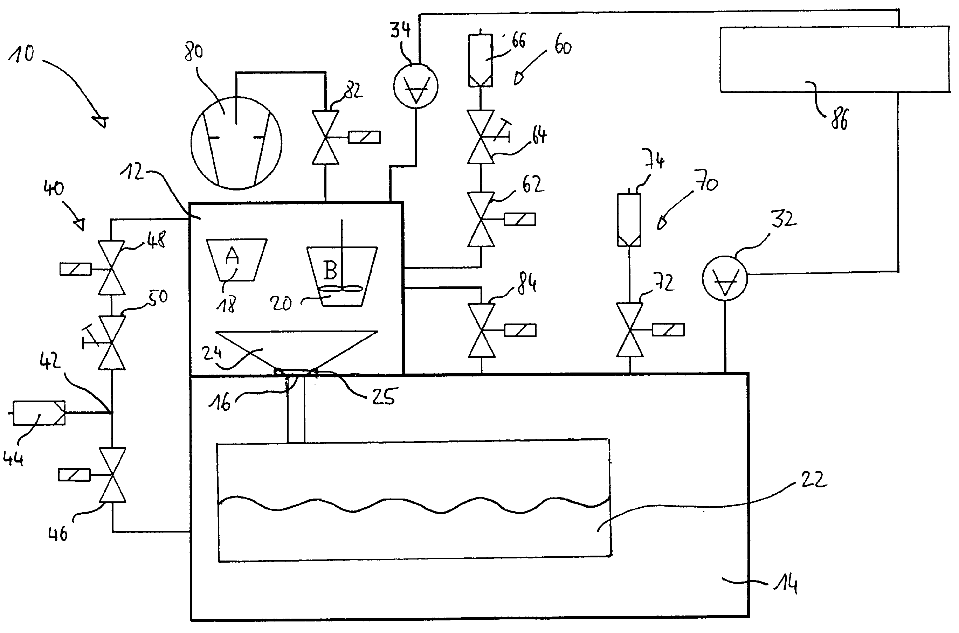

Weitere Vorteile und Einzelheiten der Erfindung ergeben sich aus der Beschreibung der nachfolgenden, bevorzugten Ausführungsform der Erfindung und aus der Zeichnung. Die Zeichnung ist eine schematische Darstellung einer zum Durchführen eines Differenzdruckverfahrens ausgebildeten Vakuumgießvorrichtung.

Die dargestellte Vakuumgießvorrichtung 10 umfaßt eine erste, obere Kammer 12 und eine zweite, untere Kammer 14. Die untere Kammer 14 weist ungefähr das fünffache Kammervolumen der oberen Kammer 12 auf.

Beide Kammern 12, 14 sind über einen Durchgang 16 miteinander verbunden. In der oberen Kammer 12 befinden sich zwei Gefäße 18, 20, welche eine erste Komponente A bzw. zweite Komponente B eines zweikomponentigen Polyurethanharzes enthalten. In der unteren Kammer 14 ist eine zweiteilige Gießform 22 angeordnet.

Im Durchgang 16, welcher die obere Kammer 12 mit der unteren Kammer 14 verbindet, ist ein Trichter 24 angeordnet. Zwischen dem Trichter 24 und dem Durchgang 16 ist eine ringförmige Dichtung 25 vorgesehen. Der Trichter 24 weist einen in der oberen Kammer 12 angeordneten, sich nach unten konisch verjüngenden oberen Abschnitt und einen sich an den oberen Abschnitt anschließenden, unteren zylindrischen Ausguß auf. Der zylindrische Ausguß erstreckt sich in die untere Kammer 14 und ist mit der Gießform 22 verbunden.

Ein erster Drucksensor 32 ist mit der unteren Kammer 14 und ein zweiter Drucksensor 34 mit der oberen Kammer 12 verbunden. Beide Drucksensoren 32, 34 sind mit einer SPS-Steuerung 86 zur Steuerung von Ventilanordnungen gekoppelt.

Eine erste Ventilanordnung 40 gestattet das Verbinden der oberen Kammer 12 mit der unteren Kammer 14 sowie das Verbinden jeder der beiden Kammern 12, 14 mit Atmosphärendruck. Die erste Ventilanordnung 40 umfaßt einen Knoten in Gestalt eines T-Stücks 42. Eine erste der drei Abzweigungen des T-Stücks 42 ist über einen Ansauggeräuschdämpfer 44 mit Atmosphärendruck verbunden. Eine zweite Abzweigung des T-Stückes 42 ist über ein elektromagnetisches Ventil 46 mit der unteren Kammer 14 verbunden. Eine dritte Abzweigung des T-Stücks 42 schließlich ist über eine Drosseleinrichtung in Gestalt eines mechanischen Drosselventils 50 sowie über ein elektromagnetisches Ventil 48 mit der oberen Kammer 12 verbunden.

Die dargestellte Vakuumgießvorrichtung 10 umfaßt weiterhin eine zweite Ventilanordnung 60, welche es gestattet, in der oberen Kammer 12 mit Hilfe eines elektromagnetischen Ventils 62, eines mechanischen Drosselventils 64 sowie eines Ansauggeräuschdämpfers 66 eine Druckdifferenz bezüglich der unteren Kammer 14 auszubilden. Eine mit der unteren Kammer 14 verbundene dritte Ventilanordnung 70, welche ein elektromagnetisches Ventil 72 und einen Ansauggeräuschdämpfer 74 umfaßt, ermöglicht das Egalisieren der Druckdifferenz.

Zum Evakuieren der beiden Kammern 12, 14 ist eine Unterdruckquelle 80 vorgesehen, welche über eine vierte Ventilanordnung in Gestalt eines elektromagnetischen Ventiles 82 mit der oberen Kammer 12 verbunden werden kann. Eine fünfte Ventilanordnung in Gestalt eines elektromagnetischen Ventils 84 gestattet es, die obere Kammer 12 z.B. zum Evakuieren oder zum Egalisieren einer Druckdifferenz mit der unteren Kammer 14 zu verbinden.

Im Ausgangszustand der Vakuumgießvorrichtung 10 sind alle elektromagnetischen Ventile 46, 48, 62, 72, 82, 84 geschlossen. Die mechanisch betätigbaren Drosselventile 50, 64 hingegen sind teilweise geöffnet.

In einem ersten Schritt des Vakuumgießverfahrens wird die Vakuumquelle 80 aktiviert. Gleichzeitig werden die beiden elektromagnetischen Ventile 82 und 84 geöffnet. Mit Hilfe der Vakuumquelle 80 werden die obere Kammer 12 und die mit der oberen Kammer 12 über das Verbindungsventil 84 mit relativ großem maximalen Öffnungsquerschnitt verbundene untere Kammer 14 auf einen Druck von weniger als 1 hPas evakuiert.

In der evakuierten oberen Kammer 12 werden daraufhin die beiden Komponenten A und B des zweikomponentigen Harzes entgast. Nach einer gewissen Zeitspanne wird die Komponente A aus dem Behälter 18 in den Behälter 20, in welchem die Komponente B angeordnet ist, überführt. Nach dem Vermischen der beiden Komponenten A und B im Behälter 20 wird das gemischte Harz in den konischen Abschnitt des Trichters 16 gegossen.

Anschließend werden die elektromagnetischen Ventile 82 und 84 geschlossen und die Vakuumquelle 80 von der oberen Kammer 12 sowie die obere Kammer 12 von der unteren Kammer 14 getrennt.

Daraufhin wird zum Ausbilden einer Druckdifferenz zwischen der oberen Kammer 12 und der unteren Kammer 14 die obere Kammer 12 mittels der zweiten Ventilanordnung 60 durch Öffnen des elektromagnetischen Ventils 62 kurzzeitig mit der Umgebung verbunden. Über das mechanische Drosselventil 64 kann die Belüftungsgeschwindigkeit der Kammer 12 kontrolliert werden. Es wird eine Druckdifferenz zwischen der oberen Kammer 12 und der unteren Kammer 14 von ungefähr 100 hPas eingestellt.

Mit Hilfe der Schwerkraft und zusätzlich der Druckdifferenz zwischen der oberen Kammer 12 und der unteren Kammer 14 wird nun das in den konischen Abschnitt des Trichters 16 eingefüllte, angemischte Polyurethanharz durch den zylindrischen Ausguß des Trichters 16 in die Gießform 22 gepreßt. Sobald die Gießform 22 gefüllt ist bzw. der Trichter 16 leerzulaufen droht, wird schlagartig die Druckdifferenz zwischen der oberen Kammer 12 und der unteren Kammer 14 egalisiert.

Zum Egalisieren der Druckdifferenz wird mittels der dritten Ventilanordnung 70 die zweite Kammer 14 kurzzeitig mit der Umgebung verbunden und so lange belüftet, bis die von den beiden Drucksensoren 32, 34 überwachte Druckdifferenz egalisiert ist.

Trotz des Egalisierens der Druckdifferenz zwischen den beiden Kammern 12, 14 herrscht nach wie vor Unterdruck in den beiden Kammer 12, 14. Aus diesem Grund müssen vor dem Öffnen der beiden Kammern 12, 14 die beiden Kammern 12, 14 durch Fluten auf Atmosphärendruck gebracht werden.

Zum Fluten der beiden Kammern 12, 14 wird die erste Ventilanordnung 40 und das Verbindungsventil 84 geöffnet. Das Fluten der beiden Kammern 12, 14 mit Hilfe der ersten Ventilanordnung 40 wird solchermaßen durchgeführt, daß sich zwischen den beiden Kammern 12, 14 keine erneute Druckdifferenz ausbilden kann. Aufgrund der unterschiedlichen Kammervolumina würde im Falle gleicher Öffnungsquerschnitte der beiden Ventile 46 und 48 der Druck in der oberen Kammer 12 nämlich schneller ansteigen als in der unteren Kammer 14. Zum Anpassen der Flutungsgeschwindigkeit der oberen Kammer 12 an die Flutungsgeschwindigkeit der unteren Kammer 14 derart, daß das Ausbilden einer Druckdifferenz zwischen beiden Kammern vermieden wird, ist die Flutungsgeschwindigkeit der oberen Kammer 12 durch das Drosselventil 50 beeinflußbar.

Das Drosselventil 50 wird vorzugsweise manuell auf einen vorab festgelegten Öffnungsquerschnitt eingestellt. Aufgrund der festen Kammervolumina ist eine Änderung des Öffnungsquerschnittes des Drosselventils 50 während des Flutens in der Regel nicht erforderlich.

Die beiden Kammern 12, 14 sind während des Flutens über das T-Stück 42 der Ventilanordnung 40 auch miteinander verbunden. Diese Verbindung der Kammern 12, 14 über das T-Stück 42 wirkt dem Aufbau einer Druckdifferenz zwischen den beiden Kammern 12, 14 während des Flutens zusätzlich entgegen. Während des Flutens der beiden Kammern 12, 14 sind die beiden Kammern 12, 14 daher sowohl über das elektromagnetische Ventil 84 als auch über die Ventilanordnung 40 miteinander verbunden.

## Patentansprüche

1. Verfahren zum Herstellen von Kunststoffteilen mittels Vakuumgießens, bei dem der Übertritt eines zu verarbeitenden Mediums von einer ersten evakuierten Kammer (12) in eine zweite evakuierte Kammer (14) von einer Druckdifferenz zwischen den beiden Kammern (12, 14) unterstützt wird, wobei im Anschluß an das Befüllen einer Gießform in den beiden Kammern (12, 14) Umgebungsdruck eingestellt wird,
**dadurch gekennzeichnet, daß**
nach dem Befüllen der Gießform (22) und vor dem Einstellen des Umgebungsdrucks in den beiden Kammern (12, 14) die Druckdifferenz unter Aufrechterhaltung eines Unterdrucks in den beiden Kammern (12, 14) egalisiert wird.

2. Verfahren nach Anspruch 1,
**dadurch gekennzeichnet, daß** während des Einstellens des Umgebungsdrucks der Druck in den beiden Kammern (12, 14) gleich groß gehalten wird.

3. Verfahren nach Anspruch 1 oder 2,
**dadurch gekennzeichnet, daß** das Egalisieren der Druckdifferenz schlagartig durchgeführt wird.

4. Verfahren nach einem der Ansprüche 1 bis 3,
**dadurch gekennzeichnet, daß** das Egalisieren der Druckdifferenz elektronisch geregelt durchgeführt wird.

5. Verfahren nach einem der Ansprüche 1 bis 4,
**dadurch gekennzeichnet, daß** nach einem Evakuieren der beiden Kammern (12, 14) der Druck in der ersten Kammer (12) zur Ausbildung der Druckdifferenz erhöht wird.

6. Verfahren nach Anspruch 5,
**dadurch gekennzeichnet, daß** zum Egalisieren der Druckdifferenz der Druck in der zweiten Kammer (14) erhöht wird.

7. Verfahren nach einem der Ansprüche 1 bis 6,
**dadurch gekennzeichnet, daß** bei Überschreiten einer voreingestellten Druckdifferenz beide Kammern (12, 14) geflutet werden.

8. Vorrichtung zur Herstellung von Kunststoffteilen mittels Vakuumgießens, mit
- einer ersten evakuierbaren Kammer (12),
- einer mit dieser über einen Durchgang (16) für ein zu verarbeitendes Medium verbindbaren zweiten evakuierbaren Kammer (14),
- einer ersten Ventilanordnung (40) zum Verbinden der beiden Kammern (12, 14) miteinander sowie zum Einstellen von Umgebungsdruck in den beiden Kammern (12, 14),
- einer mit der ersten Kammer (12) verbundenen zweiten Ventilanordnung (60) und einer mit der zweiten Kammer (14) verbundenen dritten Ventilanordnung (70) zum Erzeugen und Egalisieren einer das Vakuumgießen unterstützenden Druckdifferenz zwischen den beiden Kammern (12, 14), sowie
- einer Steuereinheit (86) zum Steuern der Ventilanordnungen (40, 60, 70, 82, 84) derart, daß nach Befüllen einer Gießform (22) und vor Einstellen des Umgebungsdrucks in den beiden Kammern (12, 14) die Druckdifferenz unter Aufrechterhaltung eines Unterdrucks in den beiden Kammern (12, 14) egalisiert wird.

9. Vorrichtung nach Anspruch 8,
**dadurch gekennzeichnet, daß** die erste Kammer (12) ein geringeres Kammervolumen aufweist als die zweite Kammer (14).

10. Vorrichtung nach Anspruch 8 oder 9,
**dadurch gekennzeichnet, daß** die erste Ventilanordnung (40) einen Knoten (42) umfaßt, über den die erste Kammer (12) mit der zweiten Kammer (14), und beide Kammern (12, 14) mit Umgebungsdruck, verbindbar sind.

11. Vorrichtung nach Anspruch 10,
**dadurch gekennzeichnet, daß** die erste Ventilanordnung (40) eine zwischen der ersten Kammer (12) und dem Knoten (42) angeordnete Drosseleinrichtung (50) umfaßt.

12. Vorrichtung nach Anspruch 10 oder 11,
**dadurch gekennzeichnet, daß** die erste Ventilanordnung (40) zwischen Umgebungsdruck und dem Knoten (42) und/oder zwischen mindestens einer der Kammern (12, 14) und dem Knoten (42) mindestens je ein Ventilelement (46, 48) umfaßt.

13. Vorrichtung nach einem der Ansprüche 8 bis 12,
**dadurch gekennzeichnet, daß** die zweite Ventilanordnung (60) und/oder die dritte Ventilanordnung (70) mindestens je ein Ventilelement (62, 72) zum Verbinden der ersten Kammer (12) und/oder der zweiten Kammer (14) mit Umgebungsdruck aufweisen.

14. Vorrichtung nach Anspruch 13,
**dadurch gekennzeichnet, daß** das Ventilelement (62, 72) der zweiten Ventilanordnung (60) und/oder der dritten Ventilanordnung (70) einen geringeren maximalen Öffnungsquerschnitt als mindestens ein Ventilelement (46, 48) der ersten Ventilanordnung (40) besitzt.

15. Vorrichtung nach einem der Ansprüche 8 bis 14,
**dadurch gekennzeichnet, daß** eine Vakuumquelle (80) und mindestens eine dritte Ventilanordnung (82) zum Verbinden der Vakuumquelle (80) mit mindestens einer der beiden Kammern (12, 14) vorhanden ist.

16. Vorrichtung nach einem der Ansprüche 8 bis 15,
**dadurch gekennzeichnet, daß** eine fünfte Ventilanordnung (84) zum Verbinden der beiden Kammern (12, 14) miteinander vorhanden ist.

17. Vorrichtung nach einem der Ansprüche 8 bis 16,
**dadurch gekennzeichnet, daß** für die Kammern (12, 14) je ein Drucksensor (32, 34) vorgesehen ist, der mit der Steuereinheit (86) für die Ventilanordnungen (40, 60, 70, 82, 84) gekoppelt ist.
